# EUROPEAN PATENT SPECIFICATION

(11) **EP 2 948 343 B1**
(45) Date of publication and mention of the grant of the patent: **23.11.2016**
(21) Application number: 14708641.7
(22) Date of filing: 27.01.2014
(51) Int. Cl.: B60Q 1/44

(54) **SYSTEM FOR VISUAL SIGNALING THE INTENSITY OF BRAKING OF A VEHICLE AND RELATIVE METHOD**
SYSTEM ZUR VISUELLEN SIGNALISIERUNG DER BREMSINTENSITÄT EINES FAHRZEUGS UND ENTSPRECHENDES VERFAHREN
SYSTÈME POUR LA SIGNALISATION VISUELLE DE L'INTENSITÉ DE FREINAGE D'UN VÉHICULE ET PROCÉDÉ ASSOCIÉ

(30) Priority: 28.01.2013 IT CZ20130002
(43) Date of publication of application: 02.12.2015
(73) Proprietor: Arcidiacono, Pietro, 95124 Catania (IT)
(72) Inventor: Arcidiacono, Pietro, 95124 Catania (IT)
(74) Representative: Scorza, Federica
(86) International application number: PCT/IB2014/000070
(87) International publication number: WO 2014/115021

(56) References cited:
- EP-A1- 2 314 477
- WO-A1-2004/110812
- DE-A1- 10 107 720
- GB-A- 2 351 858
- US-A1- 2010 066 528

## Description

The present invention relates to a system for visual signaling the intensity of braking of a vehicle and the relative method of signaling.

In particular, the present invention relates to a system for visual signaling the intensity of braking of a vehicle, of the type that provides an alert in correspondence with the deceleration of the vehicle regardless of the brake pedal of the vehicle and which takes into account the degree of danger of collision.

The present invention relates also to a method for visual signaling the intensity of braking of a vehicle, of the type that provides an alert in correspondence with the deceleration of the vehicle regardless of the brake pedal of the vehicle and dependent on the degree of danger of collision.

As is known, the systems for signaling a deceleration of a vehicle which are currently used in mass production vehicles are connected exclusively to the brake pedal. In fact, when the brake pedal is pressed, the signaling system enables the turn on of the lighting elements on the rear of vehicles, such as the headlights. These systems indicate the impending slowdown to the driver of the following vehicle, so that he can use appropriate precautions to avoid collision with the preceding vehicle. However, such systems do not signal the intensity of deceleration of the vehicle.

A system that allows to signal the intensity of deceleration is described in U.S. Patent 4667177, granted on May 19, 1987, on behalf of ATHALYE Ravindra G., and consists of a light signals system connected to the brake of a motor vehicle that uses a plurality of different color lights that need to be visually observed by drivers of vehicles which are located on the back of the vehicle itself. As soon as an increasing braking force is applied, a different color light is activated to indicate to the rear vehicle if a weak or medium or high intensity braking force is applied. The operation of the signaling system is made almost regardless of the inclination of the vehicle due to road slope or terrain roughness or non-uniform suspensions. This solution has several problems:
- it can't be used if the brake pedal is not depressed;
- it is sensitive only to the horizontal component of the longitudinal acceleration, while the other acceleration components present during the ascent or descent of the vehicle, are not taken into account;
- the speed of the vehicle is not taken into account.

Many other solutions have been proposed to improve the systems that take into account the intensity of deceleration. However, these solution present some problems:
- the sources of the acceleration signal and other kinematic variables are placed, partly or wholly, in other devices comprised inside the vehicles and this can cause compatibility and connecting problems;
- the lighting bodies of vehicles must be replaced;
- it is necessary to install the appropriate containers and supports for this type of systems, which are bulky and unsightly;
- there are too many and complex interconnections with other equipment of the vehicle, that is a problem in managing such equipment.

Several patent applications describe solutions to these problems. Two patent applications have been outlined below.

A first solution is described in the patent application DE 197 29 784, published on 15 January 1998 in the name of S. and K. Johannes Wilhelm, and describes inertial sensors placed on a vehicle for monitoring the deceleration of the vehicle. A controller activates different light modes of the brake lights which correspond to different values of deceleration of the vehicle. The function of the brake lights is automatic and independent from the operation of the brake pedal. In fact, it is only activated by the deceleration of the vehicle, as measured by the inertial sensors. The signaling modes are: modulated light intensity, flashing, activation of beeps or a combination of them. More in details, the solution consists in a system that activates warning signals using the rear lights when exceeding of a threshold of the vehicle deceleration is detected.

Although this solution appears advantageous under many aspects, it has some problems: 1) the inability to gradually vary the status of the signal lights to adjust it proportionally to the intensity of deceleration, since only a certain threshold overshoot is detected; 2) the solution doesn't calculate the speed which is correlated to the acceleration and allows to decide on the degree of dangerous level of braking considering the possibility of an impact of the following vehicle; 3) it does not comprise the use of multiple sensors to obtain a more accurate estimation of the kinematic variables and, if necessary, to signal some malfunction.

A second solution is described in the patent EP 0957000, published on 17 November 1999 on behalf of JD Newton, and describes a system for indicating the deceleration of a vehicle comprising an accelerometer located within the vehicle and able to detect its deceleration. The system includes a control mechanism that uses a group of lamps being able to be individually activated, so that they can light on with increasing deceleration detected, according to a predetermined sequence.

This solution has two problems: 1) it doesn't calculate the speed, which being related to the acceleration allows to decide on the degree of danger of braking considering the possibility of impact of the following vehicle; 2) it doesn't require the use of more than one sensors to get a more accurate estimate of the kinematic variables, but only describe the use of a single additional sensor, used exclusively to decide if the sensor that provides the values to be processed is working properly or not.

Both the first and the second solution described above provide alerts depending only on the deceleration of the vehicle and being independent from the brake pedal, but since these solutions do not correlate the vehicle deceleration to its speed, they do not provide accurate information on the level of danger braking in relation to the possibility of impact on the following vehicle, given that the potential danger of braking not only depends on the magnitude of deceleration, but on the state of all the kinematic quantities of the vehicle.

A solution that tries to solve these problems is presented in the patent application EP 2314477 published on 27 April 2011, on behalf of UVA SRL. The patent application describes a system for visual signaling the deceleration of a vehicle, the system being installed on a vehicle and being activated independently from the use of the brake pedal for any deceleration event and whatever the cause that determines it. Indeed, the use of the brake pedal is not the only cause of the speed reduction, which can be caused by several other conditions that can happen quite easily in a moving vehicle. Furthermore, the system calculates the other kinematic variables, which are useful for the operations of the system, and, in case of deceleration, activates a visual signal, which may vary in terms of intensity, frequency and color according to the danger level, related to the intensity of the deceleration and of all other kinematic variables of the vehicle.

However, a problem of this solution is that, even if more acceleration sensors are used, the system calculates a single signal of validity for both sensors and doesn't calculate a signal of validity for each of the sensors. Indeed, it isn't provided a general criterion for deriving the validity signals related to each sensor, if a plurality of sensors is present. Moreover, this solution can't calculate the best value of acceleration in the case of a multiplicity of sensors.

It follows that the values of the acceleration and of the other kinematic variables calculated from the acceleration are not determined in the best way possible, so that the reliability of the choice of the most appropriate way of signaling can't be guaranteed. Moreover, it is not uniquely defined a criterion of correlation between the kinematic variables of the vehicle and the danger level of braking and collision.

Purpose of the present invention is to provide a system for visual signaling the intensity of braking of a vehicle, comprising a plurality of acceleration sensors, of the type that provides an alert in correspondence with the deceleration of the vehicle independently from the use of the brake pedal of the vehicle and that takes into account the degree of danger of collision, and a method for visual signaling the intensity of braking of a vehicle, which correlates the kinematic variables of the vehicle and the danger level of the braking and collision so as to overcome the limitations which still affect the systems and the methods previously described with reference to the known technique.

According to the present invention, a system for visual signaling the intensity of braking of a vehicle is provided, as defined in claim 1.

According to the present invention, a method for visual signaling the intensity of braking of a vehicle is provided, as defined in claim 9.

For a better understanding of the present invention a preferred embodiment is now described, purely as nonlimiting example, with reference to the accompanying drawings, in which:
- Figure 1 schematically shows a system for visual signaling the intensity of braking of a vehicle, according to the invention;
- Figure 2 schematically shows a preferred embodiment of the detecting unit of the system of visual signaling the intensity of braking of a vehicle, according to the invention;

- Figure 3 schematically shows a preferred embodiment of the calculation unit for calculating the validity signals of the acceleration sensors of the system for visual signaling the intensity of braking of a vehicle, according to the invention;
- Figure 4 schematically shows the detailed preferred embodiment of the calculation unit for calculating the validity signals of the acceleration sensors of the system for visual signaling the intensity of braking of a vehicle, according to the invention;
- Figure 5 schematically shows a preferred embodiment of the calculation unit for calculating the best value of the acceleration A of the system for visual signaling the intensity of braking of a vehicle, according to the invention;
- Figure 6 schematically shows a preferred embodiment of the processing unit of the system for visual signaling the intensity of braking of a vehicle, according to the invention;
- Figure 7 schematically shows a preferred embodiment of the actuating unit of the system for visual signaling the intensity of braking of a vehicle, according to the invention;
- Figure 8 shows the truth table of the circuit for calculating the validity bit of the validity signals, according to the invention;
- Figure 9 shows a first decision table that correlates the vehicle deceleration and speed values to the collision danger level of the system for visual signaling the intensity of braking of a vehicle, according to the invention;
- Figure 10 shows a flowchart of the method for visual signaling the intensity of braking of a vehicle, according to the invention;
- Figure 11 shows a flowchart of the calculation of the collision danger level and the relative signaling mode in the condition of full operation of the method for visual signaling the intensity of braking of a vehicle, according to the invention;
- Figure 12 shows a second decision table that correlates the vehicle deceleration and speed values to the collision danger level of the system for visual signaling intensity of braking of a vehicle, according to the invention.

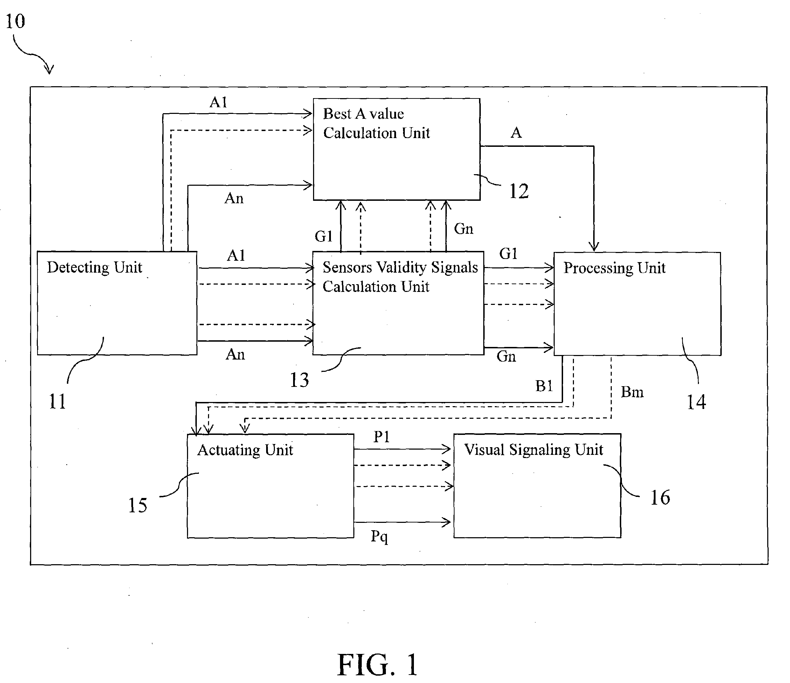

With reference to these figures, and in particular to Figure 1, a system 10 for visual signaling of the intensity of braking of a vehicle is shown, according to the invention. The system 10 comprises the following functional units: a detecting unit 11 comprising acceleration sensors, a first calculation unit 12 for calculating the best acceleration value, a second calculation unit 13 for calculating the validity signals of the acceleration sensors, a processing unit 14, an actuating unit 15 and a visual signaling unit 16.

According to an aspect of the invention, the detecting unit 11 comprises a plurality of acceleration sensors 1....n. The detecting unit 11 is configured for providing the values A1 ... An of the n sensors accelerations to the first calculation 12 for calculating the best acceleration value A and, simultaneously, to the second calculation unit 13 of validity signals G1 ... Gn. The validity signals G1 ... Gn are provided simultaneously to the first calculation unit 12 and to the processing unit 14. In particular, if the value of the validity signals G1 ... Gn is equal to 1 it indicates that the sensors 1 ... n are working properly, while if the value of the validity signals G1 ... Gn is equal to 0 it indicates that the sensors are working incorrectly.

In this way, the calculation unit 12 for calculating the best value of the acceleration A is configured for performing a calculation based on the accelerations of the correctly functioning sensors and for providing the best value of the acceleration A.

According to an aspect of the invention, if two or more sensors are comprised in the system, the best value of the acceleration A is calculated by averaging the values of the acceleration signals of the sensors.

According to another aspect of the invention, if a plurality of sensors is comprised in the system, the best value of the acceleration A is calculated by averaging the closest values of the acceleration signals of the sensors.

According to an embodiment of the invention, the system for visual signaling the intensity of braking of a vehicle comprises three sensors and provides four danger levels of collision which are signaled trough three rear signaling lights placed respectively one in a central location and the other two at lateral positions of the back of the vehicle. More in particular, the level 0 is associated with the lack of dangerousness and it corresponds to the non-turn on of the rear lights; the level 1 corresponds to a low danger level signaled by the turn on of the only central rear light; the level 2 corresponds to a medium danger level signaled by the turn on of the central and lateral lights; the level 3 corresponds to a high danger level signaled by the turn on of the central light and the flashing of the lateral lights.

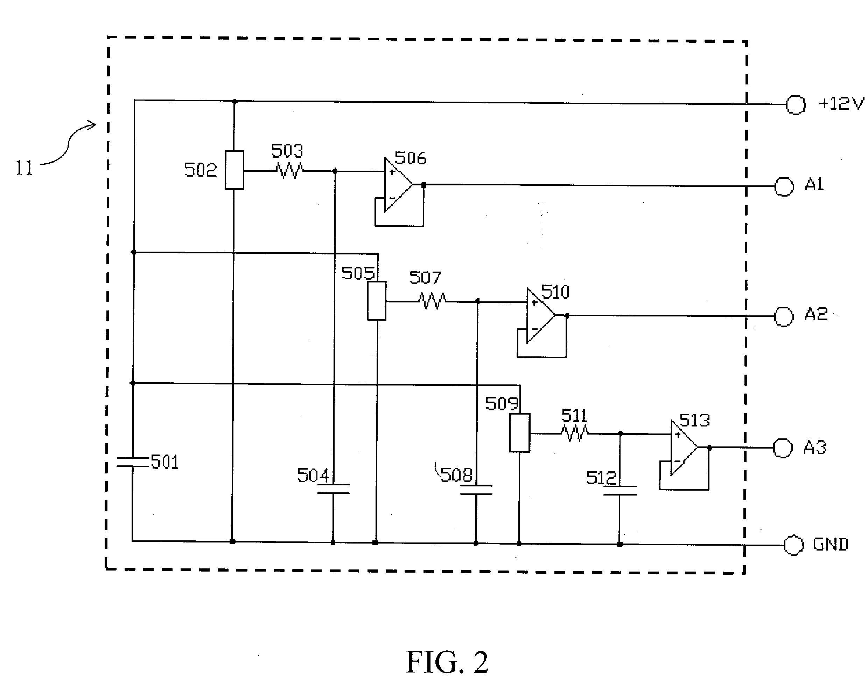

According to an aspect of the invention, the detecting unit 11 has been realized as the circuit shown in Figure 2. In particular, the components 502, 505 and 509 are the three acceleration sensors. The component 501 is a power supply capacitor while all other components form three low pass filters to attenuate the disturbances that can deteriorate the acceleration signals. The three components 503, 504 and 506 implement the filter that provides the output acceleration value A1, the components 507, 508 and 510 provide the acceleration value A2, the components 511, 512 and 513 provide the acceleration value A3. All the operational amplifiers 506, 510 and 513 are powered by 12 volts.

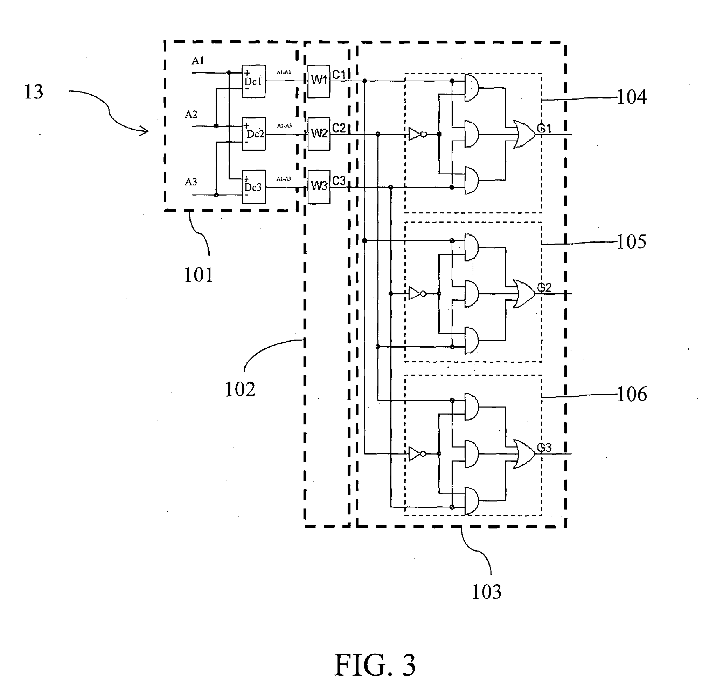

By way of example, figure 3 shows the calculation unit 13 of the acceleration sensors validity signals, for three sensors comprised in the detecting unit 11. The sensors validity signals calculation unit 13 comprises a first differential circuit block 101, configured for providing the difference between the signal values of all possible pairs of sensors, by means of the differential circuits Dc1, Dc2 and Dc3. More in particular, Dc1 calculates the difference between the acceleration values A1 and A2; Dc2 calculates the difference between the acceleration values A2 and A3; and Dc3 calculates the difference between the acceleration values A1 and A3. The difference values A1-A2, A2 -A3, A1-A3, are transmitted to a second comparator circuit block 102, comprising three window comparators, W1, W2 and W3, each configured for verifying that the difference values are comprised within a tolerance range which has the extremes symmetrical with respect to zero, given that the difference between the acceleration values of the two sensors can be either positive or negative without exceeding the absolute value of a threshold which is determined by the manufacturing error characteristics of the sensors. Therefore, if the difference of the acceleration values of the two sensors falls within this range, the output of the circuit block 102 indicates that the two corresponding sensors provide compatible acceleration values. Therefore, if the differences values being the inputs of the comparators W1, W2 and W3 are comprised within the tolerance range, the signals C1, C2, C3 being the output of the comparators have a value equal to 1, otherwise the signals C1, C2, C3 are equal to 0. The signals C1, C2 and C3 are then sent to a third circuit block 103 comprising combinatory logic circuits 104, 105 and 106 of adapted to process the signals C1, C2 and C3 and to provide, as output signals, the signals G1, G2 and G3 indicating whether the corresponding sensor 1, 2, 3 is properly working or not. In particular, if the signals G1, G2 and G3 have a value equal to 1, indicate that the corresponding sensors are working properly, while if they have a value equal to 0, they indicates that the corresponding sensors do not work properly.

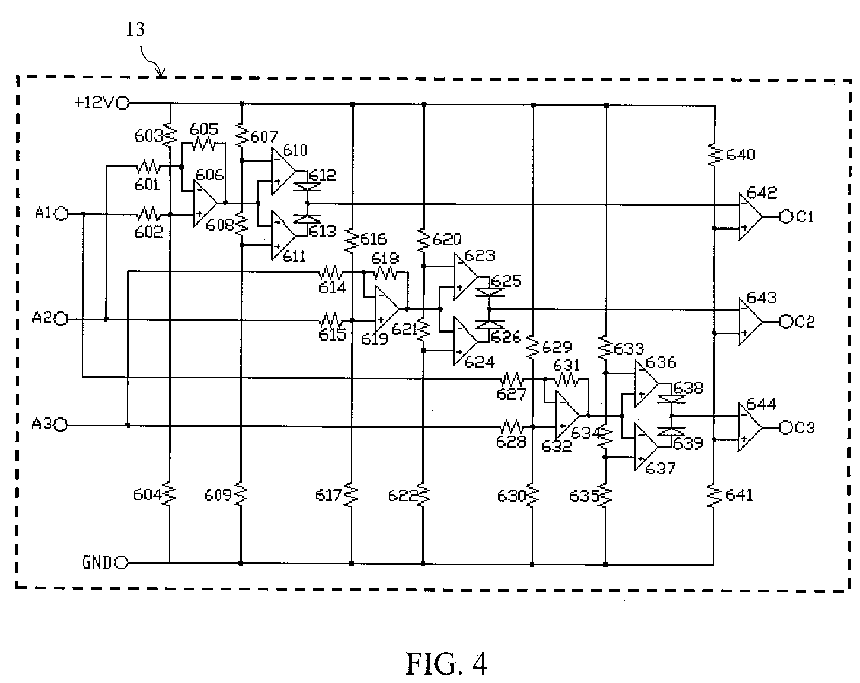

The Figure 4 shows, as way of example, a circuit diagram of the circuit blocks 101 and 102 of the calculation unit 13. The differential circuit block 101, shown in Figure 3, comprises: a first differential circuit formed by the components 601, 602, 603, 604, 605 and 606 and which provides, as output signal, the difference between A1 and A2, a second differential circuit comprising the components 614, 615, 616, 617, 618 and 619 and which provides, as output signal, the difference between A2 and A3; and a third differential circuit comprising the components 627, 628, 629, 630, 631 and 632 and which provides, as output signal, the difference between A3 and A1. All differences go to a second comparator circuit block 102 comprising: a first window comparator, formed by the components 607, 608, 609, 610, 611, 612, 613 and 642, which checks whether the difference between the acceleration value provided from the sensor 1 and the acceleration value provided by the sensor 2 is within a tolerance range, providing the signal C1 as an output; a second window comparator, formed by the components 620, 621, 622, 623, 624, 625, 626 and 643, which checks whether the difference between the acceleration value provided by the sensor 2 and the acceleration value provided by the sensor 3 is within a tolerance range, providing as an output the signal C2; and a third window comparator, formed by the components 633, 634, 635, 636, 637, 638, 639 and 644, which checks whether the difference between the acceleration value provided by the sensor 3 and the acceleration value provided by the sensor 1 is within a tolerance range, providing as an output the signal C3. The signals C1, C2 and C3 enter the digital-combinatorial circuit 103 of Figure 3. The operational amplifiers 606, 610, 611, 619, 623, 624, 632, 636 and 637 are powered by 12 volts while the operational 642, 643 and 644 and the logic circuits 104, 105 and 106 are powered by 5 volts.

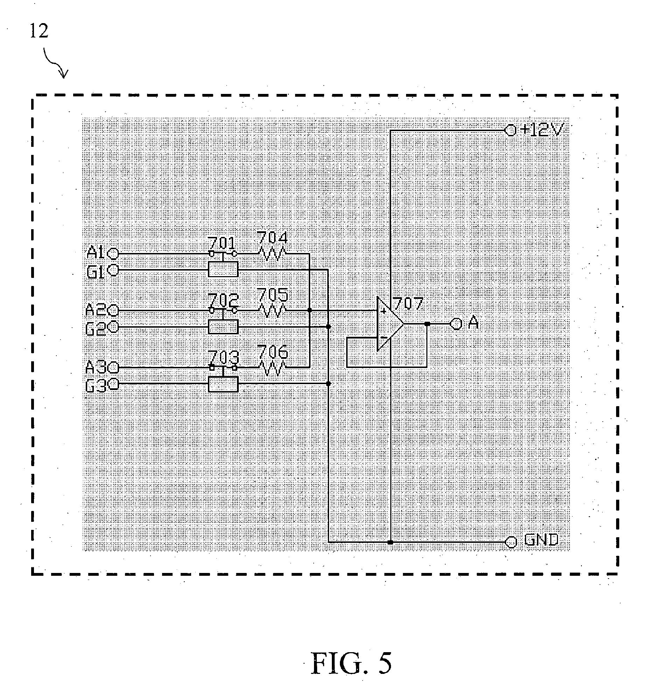

The Figure 5 shows, by way of example, a circuit diagram of the calculation unit 12 of the best value of A. In particular, the calculation unit 12 comprises the components 704, 705, 706 and 707 that perform the average of the accelerations A1, A2 and A3 if, respectively, the switches 701, 702 and 703 are closed. In particular, the switch 701, which disable ore enable the transfer of the acceleration signal A1, is controlled by the validity signal G1 which, if it is equal to 1, keeps the switch closed transferring the A1 value, while, if it is equal to 0, opens the switch interrupting the transfer of the A1 value to the circuit that performs the average. The switch 702, which disable or enable the transfer of the acceleration signal A2, is controlled by the validity signal G2 which, if it is equal to 1, keeps the switch closed transferring the A2 value, while, if it is equal to 0, opens the switch interrupting the transfer of the A2 value to the components that perform the average. The switch 703, which disable or enable the transfer of the acceleration signal A3, is controlled by the validity signal G3, which, if it is equal to 1, keeps the switch closed transferring the A3 value, while, if it is equal to 0, opens the switch interrupting the transfer of the A3 to the components that perform the average. In this way, the output A represents the best value of the acceleration A and it is the average only of the acceleration values coming from the working properly sensors. The operational amplifier 707 is powered by a 12 Volt.

The processing unit 14 is configured for deciding the signaling mode of the vehicle as a function of the chosen danger level. In particular, the processing unit 14 calculates the danger level of collision and encodes a corresponding signaling mode as a binary number, transmitting the bits B0 ... Bm, being m=n-2, to the actuating 15. These bits B0 ... Bm represent, in binary code, the different visual signaling modes and, henceforth, are indicated by the word bit mode.

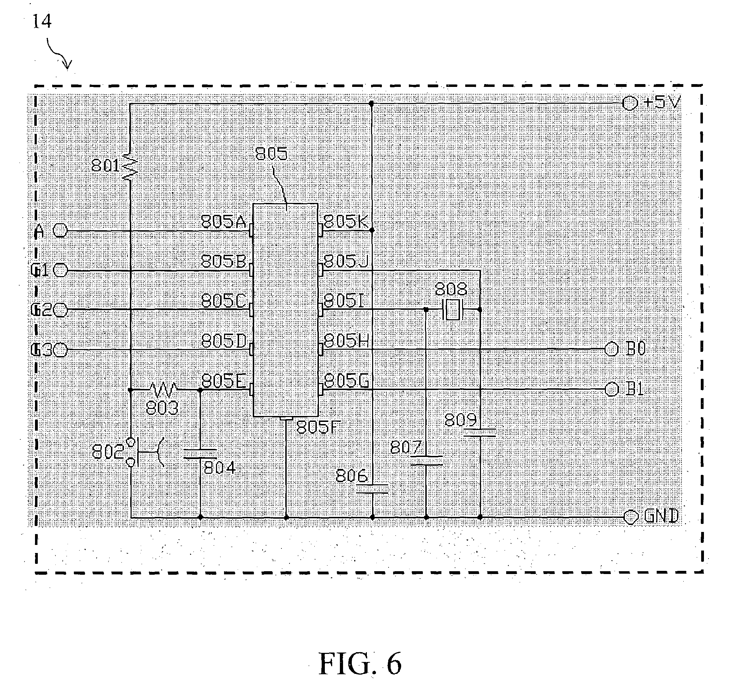

Figure 6 shows, for example, a circuit diagram of the processing unit 14. It receives as inputs the best value of the acceleration A and the sensors validity signals G1 ... Gn, and specifically G1, G2 and G3 related to a number n of sensors equal to 3. The processing unit 14 processes G1, G2, G3 and provides as outputs the digital signals B0 and B1. In particular, the processing unit 14 comprises a microcontroller 805, powered at 5 volts, a reset circuit, formed by the components 801, 802, 803 and 804, and a clock generation circuit, formed by the components 807, 808 and 809. The terminal 805A is the analog input of the microcontroller configured for receiving the best acceleration value, while the digital inputs 805B, 805C and 805D are used for respectively receiving the validity signals of the sensors 1, 2 and 3. The terminals 805G and 805H provide as outputs the digital signals, also referred to as bit modes, B0 and B1.

The actuating unit 15 is configured for decoding the bit modes B0 ... Bm, determining the number and the position of the lighting bodies of the vehicle depending on the signaling mode to be activated. The signaling mode:
- Turning on or off of the lighting bodies;
- Turning on or off of the lighting bodies according to a programmable sequence;
- The intermittent turning on of the lighting bodies with programmable frequency and "duty cycle".

Moreover, the actuating unit 15 controls the electric power conveyed to the signaling unit 16, which is formed by the lighting bodies, even of different colors, configured for the visualization of the different signaling modes. In particular, the actuating unit 15 decodes the signals B0 ... Bm and provides the signals P1 ... Pq to the lighting bodies of the signaling unit 16.

In particular, for the case of a system comprising only three sensors, the signals B0 ... Bm reduce to two signals B0 and B1, which are transmitted by the processing unit 14 to the actuating unit 15 so that this unit 15 can activate the signaling lights of the signaling unit 16 in an appropriate manner considering the braking conditions of the vehicle, and more precisely:
- if the two bit modes B0 and B1 are set both equal to 0, the danger level is set equal to 0 and no visual signaling is activated;
- if the two bit modes B0 and B1 are set respectively equal to 1 and 0, the danger level is set equal to 1 and only the rear central light is turned on;
- if the bit modes B0 and B1 are set respectively equal to 0 and 1, the danger level is set equal to 2 and all the rear lights are turned on;
- if the bit the modes are set both equal to 1, the danger level is set equal to 3 and the rear central light is turned on and the rear lateral lights flash.

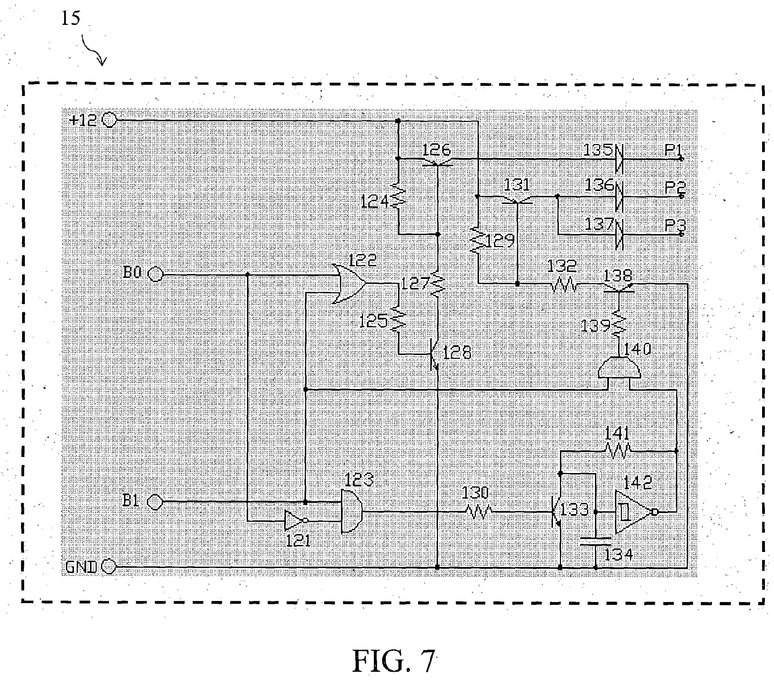

The figure 7 shows, by way of example, the actuating unit circuit diagram for decoding the input signals B1 and B0 providing as the signals P1, P2 and P3 as output signals of the signaling unit 16. More specifically, when B1 and B0 are equal to 0 logic level, the transistors 126 and 131 are blocked and act as open switches, disabling the powering of the lighting bodies which stay turned off. When B1 is equal to 0 and B0 is to 1, the transistor 126 is in saturation and acts as a closed switch, transferring the electric power to the line P1 connected to the rear central light which turns on. When B1 is equal to 1 and B0 is equal to 0, the transistors 126 and 131 are in saturation and act as closed switches, transferring the electric power to the lines P1, P2 and P3, which are connected to the rear central and lateral lights which turn on. When B1 and B0 are both equal to 1, the transistor 126 is in saturation and act as a closed switch, transferring the electric power to the line P1 connected to the rear central light that illuminates. At the same time the transistor 131 passes periodically from the saturation state to the interdiction state transferring intermittent electric power to the lines P2 and P3, connected to the rear lateral lights that light up intermittently accordingly. The frequency of intermittency is fixed by a square wave oscillator circuit formed by the components 133, 134, 141 and 142. All digital components 121, 122, 123, 140 and 142 are powered by 5 volts.

The signaling unit 16 is formed by the vehicle rear lights, used for the signaling of braking, one of them being placed in a central position and two of them laterally.

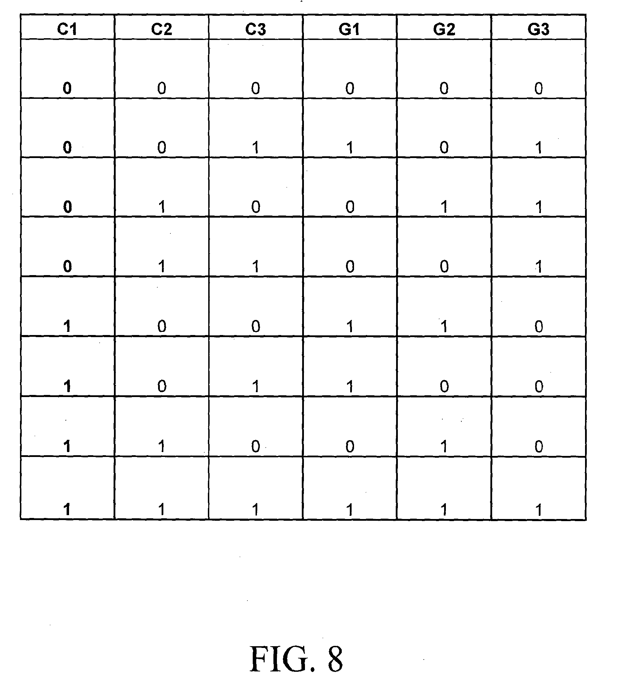

The operation of the system 10 takes place in accordance with the truth table shown in Figure 8, in which all the possible combinations of C1, C2 and C3 are shown.

Taking into consideration, for example the third row of the table of Figure 8, in which the signals C1, C2 and C3 are respectively equal to 0, 1 and 0, corresponding to a difference between A1 and A2 out of the tolerance range, a difference between A2 and A3 within the tolerance range and a difference between A1 and A3 out of the tolerance range, the values G1, G2 and G3 are respectively 0, 1 and 1. That means that the sensors 2 and 3 are functioning properly while the sensor 1 does not.

The processing unit 14, which receives, from the calculation unit 12, the best acceleration value A and, from the calculation unit 13, the validity signals G1 ... Gn, calculates, starting from the acceleration value A, the other vehicle kinematic variables useful for providing the danger level of the vehicle's collision and to choose the corresponding signaling mode.

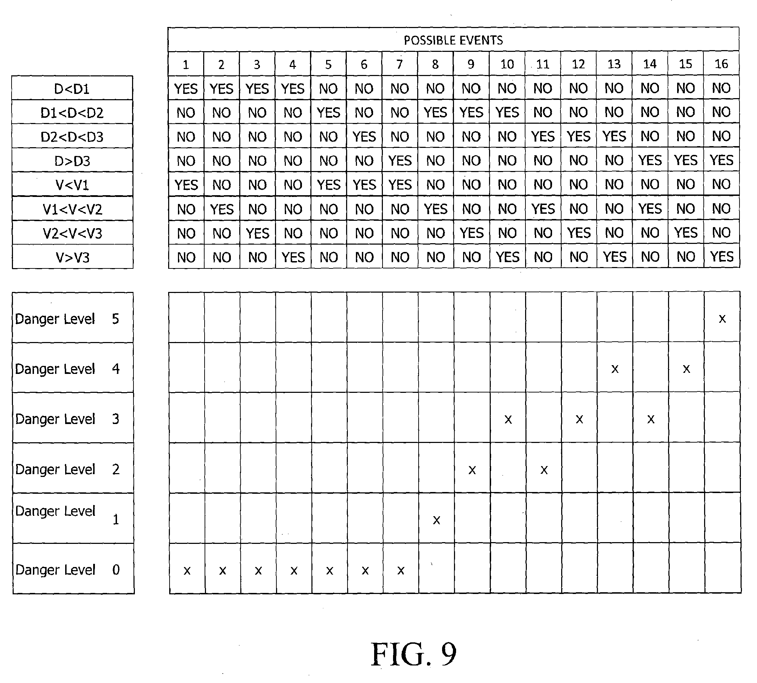

The Figure 9 shows a possible decision table that correlates the values of vehicle deceleration and speed to the collision danger level of the system of visual signaling the intensity of braking of a vehicle, according to the invention. The vehicle speed V is calculated by the processing unit 14 integrating the best acceleration value A supplied by the calculation unit 12. V1 is referred below as a minimum reference speed value below which the speed can be considered almost equal to 0 because it falls within the error tolerance range of the sensor; V2 is referred as a medium reference speed value as a threshold value to determine the transition from a low speed to a medium speed; and V3 is referred below as a maximum speed value set as a threshold value to determine the transition from a high speed to a medium speed. D1 is referred below as a minimum reference value of deceleration below which the acceleration can be regarded almost equal to zero because it falls within the error tolerance range of the sensor; D2 is referred below as a medium deceleration value which has been fixed as the threshold value to determine the transition from a low acceleration to a medium acceleration; D3 is referred below as a maximum deceleration value which has been fixed as the threshold value to determine the transition from an average acceleration value to a high acceleration value. In particular, in order to calculate the collision danger level, eight occurrences corresponding to the vehicle deceleration values D and to the vehicle speed values V have been taken into consideration and classified. More in details, the eight occurrences reported in the table are the following:
1. if D<D1, the deceleration is considered to be negligible;
2. if D1<D<D2, the deceleration is considered to be low;
3. if D2<D<D3, the deceleration is considered to be medium;
4. if D>D3, the deceleration is considered to be high;
5. if V<V1, the speed is considered to be negligible;
6. if V1<V<V2, the speed is considered to be low;
7. if V2<V<V3, the speed is considered to be medium;
8. if V>V3, the rate is considered to be high.

In this case, the danger levels are six and have been numbered from 0 to 5. In particular, the danger level 0 indicates the absence of danger, while the danger level 5 indicates a very high degree of danger, passing through intermediate danger levels 1, 2, 3 and 4, which refer respectively to a very low danger, low danger, medium danger and high danger.

If, for example, the first column of the decision table of Figure 9 is taken in consideration, the corresponding event refers to a negligible deceleration and a negligible speed. Therefore, the corresponding danger level is equal to 0. Instead, the column 10 refers to an event of low deceleration and high speed, which corresponds to a medium danger level. Finally, the situation of the column 13 is related to a medium deceleration and a high speed, which corresponds to a high danger level.

In order to obtain an accurate danger level, an algorithm, based on the decision table of Figure 9 using the kinematic variables values, such as the vehicle speed and deceleration, and also the values of the distance from a following vehicle and the speed of such following vehicle, is implemented. Moreover, if the real values of the distance from a following vehicle and of the speed of such following vehicle are missing for the absence of suitable sensors, it is assumed that, under the conditions preceding the braking, the following vehicle proceeds at the same speed and is at a safe distance from the vehicle.

Advantageously according to the invention, since the processing unit 14 receives the acceleration sensors validity signals G1, G2,..., Gn, namely the information on the sensor functioning, the processing unit 14 provides the decision on the danger level also according to the accuracy of the acceleration value A.

According to an aspect of the invention, if all the sensors 1 ... n are functioning properly, the accuracy degree of the acceleration value A is high and higher is the accuracy of the danger level, that means that the danger level can be classified using a certain number of danger levels.

According to another aspect of the invention, if the sensors are not all functioning properly, the number of danger levels decreases. In particular, when only one sensor is working properly, it's not possible to find a danger level, but it's possible to know if the vehicle is decelerating or not. In this particular case, the only occurring events are the activation or non-activation of the vehicle signaling lights.

According to a further aspect of the invention, if no sensor is functioning properly, the system 10 is blocked.

As above explained, the present patent application also relates to a method of operating a system for visual signaling the intensity of braking of a vehicle and, in particular, independent from the use of the brake pedal.

The method comprises the steps of:
- Detecting the acceleration signals A1 ... An of a vehicle by the use of acceleration sensors 1...n;
- Calculating the acceleration sensors validity signals G1 .... Gn;
- Calculating the best acceleration value A, by using the values provided from the properly functioning sensors;
- Calculating the value of the vehicle speed V, integrating the best value of the vehicle acceleration value;
- Associating the deceleration value D and the speed value V to a collision danger level related to the vehicle collision risk;
- Correlating the collision danger level with a signaling mode that duly informs or alerts the following vehicle.

In particular, the phase of calculating the acceleration sensors validity signals G1 .... Gn comprises the phase of:
- deriving the difference A1-A2, A2-A3, A1-A3 between the acceleration values A1, A2, A3 of the possible pairs of sensors 1, 2; 2, 3; 1, 3 respectively by means of differential circuits Dc1, Dc2, Dc3;
- comparing the difference values A1-A2, A2-A3, A1-A3 verifying if the difference values A1-A, A2-A3, A1-A3 belong to a tolerance range having values symmetrical with respect to zero, providing output signals C1, C2, C3 having a logic value equal to 1 for sensors 1, 2; 2, 3; 1, 3 with compatible acceleration values and equal to 0 for sensors 1, 2, 2, 3; 1, 3 with incompatible acceleration values;
- processing the signals C1, C2, C3 and providing, as output, signals G1, G2, G3 having a logic value equal to 1 respectively for properly functioning sensors 1, 2, 3 and logic value equal to 0 respectively for not properly functioning sensors 1, 2, 3.

According to an aspect of the invention, the step of calculating the best acceleration value A comprises the step of calculating the average value between the acceleration sensors values.

According to another aspect of the invention, the step of calculating the best acceleration value A comprises the step of calculating the average value between the two acceleration values closest to the real sensor acceleration values.

According to a further aspect of the invention, the step of correlating the speed value and the acceleration value to a collision danger level comprises the step of identifying six different danger levels:
- a danger level equal to 0, in correspondence of which no signaling mode is activated, if the negative acceleration, or deceleration, value is less than a predetermined minimum value D1, or if the speed value is less than a predetermined minimum value V1;
- a danger level equal to 1, if the deceleration is low (D1<D<D2) and the speed is also low (V1<V<V2);
- a danger level equal to 2, if the deceleration is low (D1<D<D2) and the speed is medium (V2<V<V3) or if the acceleration is medium (D2<D<D3) and the speed is low (V1<V <V2);
- a danger level equal to 3, if the deceleration is low (D1<D<D2) and the speed is high (V>V3) or if the deceleration is medium (D2<D<D3) and the speed is medium (V2<V<V3) or if the deceleration is high (D>D3) and the speed is low (V1<V<V2);
- a danger level equal to 4, if the deceleration is medium (D2<D<D3) and the speed is high (V>V3) or when the deceleration is high (D>D3) and the speed is medium (V2<V< V3) ;
- a danger level equal to 5, if both the deceleration and the speed are high (D>D3 and V>V3).

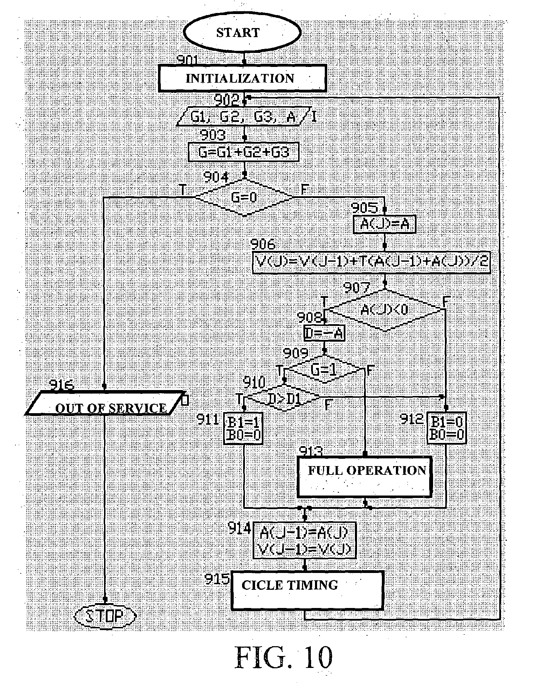

In the specific situation of using the system comprising only three acceleration sensors, the method for visual signaling is schematically illustrated by the flow diagram shown in Figure 10. More specifically, after the power-on or the reset of the system 10, the method comprises:
- the operation 901 of preparing the lines of input/output and assigning initial values to the different variables of the system 10;
- the operation 902 of acquiring the best value A of the acceleration signals and the sensors validity signals G1, G2 and G3;
- the operation 903 of calculating the sum of G1, G2 and G3 and assigning to a variable G the result representing the number of the properly functioning sensors;
- the operation 904 of determining whether the value of G is equal to 0;
- the operation 916 of disabling the system 10, if the value of G is equal to 0, this value corresponding to the status that all sensors are malfunctioning;
- the operation 905, if the value of G is not equal to 0, of assigning to A(J) the best acceleration value A obtained with the operation 902;
- the operation 906 of calculating the speed value V(J), by integrating the acceleration A(J) in the time interval T;
- the operation 907 of checking whether the acceleration is negative, i.e. if the deceleration D is positive;
- the operation 912 of assigning the value 0 to the bit modes B1 and B0, if the acceleration A(J) is not less than 0, i.e. if there is no deceleration D;
- the operation 908 of calculating the deceleration D, if the acceleration A(J) is less than 0;
- the operation 909 of determining whether the value of G is equal to 1, i.e. of checking if there is only one properly functioning sensor;
- the operation 910 of verifying if the deceleration exceeds a minimum value D1;
- the operation 911 of assigning the value 1 and 0 respectively to the bit modes B0 and B1, if the deceleration exceeds a minimum value D1;
- the operation 912 of assigning the value 0 to the bit modes B1 and B0, if the deceleration does not exceed the minimum value D1;
- the operation 913 of continue with the full operation, if G is not equal to 1 and at least two sensors are properly functioning;
- The operation 914 of storing the acceleration values A(J) and the speed values V(J) already processed;
- the operation 915 of waiting for the completion of the calculation cycle, after a predetermined time period T.

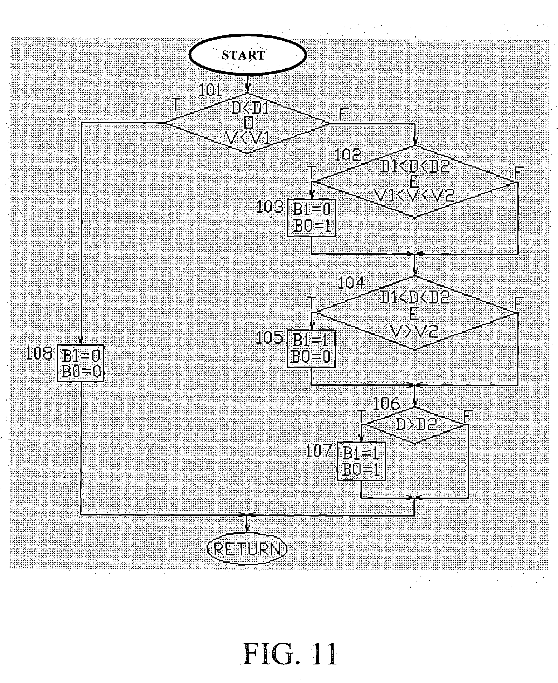

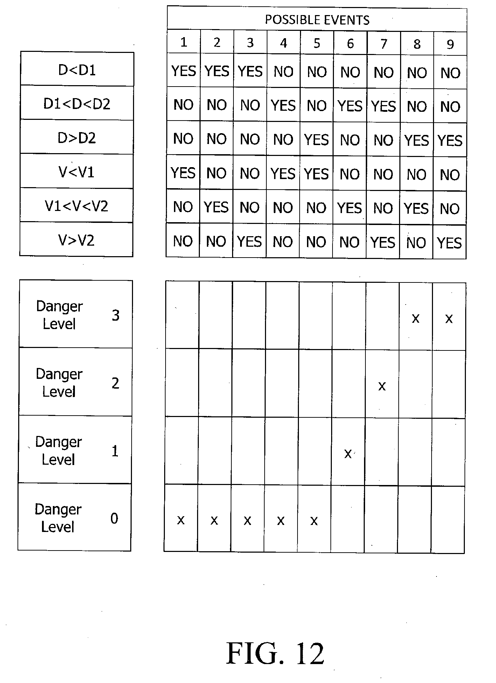

The figure 11 shows the flowchart diagram of the algorithm used for the calculation of the collision danger level and the relative signaling mode in the case of complete operation of the system. In particular, the flowchart realizes the decision table shown in figure 12 referred to four danger levels. Indeed, in the flowchart of Figure 11 the operations 101 and 108 are performed if the deceleration D<D1, i.e. negligible deceleration, or the speed V<V1, i.e. negligible speed. In this case, the first 5 columns of the table in Figure 12, which represent these events, identify a danger level equal to 0, which corresponds to the turning off of all the vehicle signaling lights (B1=B0=0). The operations 102 and 103 of the flowchart are performed if D1<D<D2 and V1<V<V2, i.e. medium-low deceleration and medium-low speed. In this case, the column 6 of the table of figure 12, which represents this condition, identifies a danger level equal to 1, which corresponds to the turn on of the single rear central light (B1=0 and B0=1). The operations 104 and 105 of the flowchart are performed if D1<D<D2 and V>V2, i.e. for medium-low deceleration and high speed. In this case, the column 7 of the table, which represents this possibility, identifies a danger level 2, which corresponds to the turn on of all the rear lights (B1=1 and B0=0). The operations 106 and 107 of the flowchart are performed if D>D2, i.e. for high deceleration. In this case, the columns 8 and 9 of the table of figure 12, which represent these condition, identify a danger level 3, which corresponds to the turn on of the rear central light and to the flashing of the rear lateral ones (B1=1 and B0=1).

Therefore, using the system and the method for visual signaling the intensity of braking of a vehicle according to the invention it is possible to use a plurality of sensors whose signals are processed simultaneously by means of analog circuits having negligible propagation delays.

Additionally, using the system and method for visual signaling the intensity of braking of a vehicle according to the invention the reliability is increased due to the accuracy of the collision danger level.

Finally, using the system and method for visual signaling the intensity of braking of a vehicle according to the invention the calculation of the collision danger level and the switching on or off of the vehicle signaling lights are managed at the same time.

Finally it is clear that the system and method for visual signaling the intensity of braking of a vehicle described and illustrated here can be modified and varied without departing from the protective scope of the present invention, as defined in the appended claims.

## Claims

1. System (10) for visual signaling the intensity of braking of a vehicle independent on the brake pedal of the vehicle, comprising:
- a detecting unit (11), comprising a plurality of acceleration sensors (1 .... n) able to provide signals (A1 ... An) corresponding to the longitudinal acceleration of the vehicle;
- a first calculation unit (12) for calculating the best acceleration value A, receiving the signals (A1 ... An) from the detecting (11) and validity signals (G1 ... Gn) of the acceleration sensors (1 .... n) from a second calculation unit (13);
- a second calculation unit (13) of the validity signals (G1 ... Gn) of the acceleration sensors (1 .... n), receiving the signals (A1 ... An) from the detecting unit (11) ;
- a processing unit (14) configured for receiving the best acceleration value A from the calculation unit (12) and the validity signals (G1 ... Gn) from the calculation unit (13) and for providing digital mode signals (B1 ... Bm) to an actuating unit (15);
- an actuating unit (15) configured for decoding the digital mode signals (B1 ... Bm) and for providing electrical output signals (P1 ... Pq) to a visual signaling unit (16);
- a visual signaling unit (16) comprising lighting bodies able to be activated by the electrical output signals (P1 ... Pq);
said processing unit (14) being configured for determining the vehicle speed value V and for combining it with the best acceleration value A, so as to determine, in case of braking of the vehicle, a plurality of levels of collision dangerousness (0 ... k) in correspondence of which said actuating unit (15) is configured for correlating the digital mode signals (B1 ... Bm) to predetermined visual signaling modes of the lighting bodies of the visual signaling unit (16);
**characterized in that** the second calculation unit (13) comprises:
- A first differential circuit block (101), able to derive the difference (A1-A2, A2-A3, A1-A3) between the acceleration values (A1, A2, A3) of the possible pairs of sensors (1, 2; 2, 3; 1, 3) respectively by means of differential circuits (Dc1, Dc2, Dc3);
- A second circuit block (102) for comparing the difference values (A1-A2, A2-A3, A1-A3) comprising window comparators (W1, W2, W3) configured for verifying if the difference values (A1-A, A2-A3, A1-A3) belong to a tolerance range having values symmetrical with respect to zero, providing output signals (C1, C2, C3) having a logic value equal to 1 for sensors (1, 2; 2, 3; 1, 3) with compatible acceleration values and equal to 0 for sensors (1, 2, 2, 3; 1, 3) with incompatible acceleration values;
- A third circuit block (103) comprising combinational logic circuits (104, 105, 106) configured for processing the signals (C1, C2, C3) and for providing, as output, signals (G1, G2, G3) having a logic value equal to 1 respectively for properly functioning sensors (1, 2, 3) and logic value equal to 0 respectively for not properly functioning sensors (1, 2, 3).

2. Method of operating a system (10) for visual signaling the intensity of braking of a vehicle independent on the brake pedal of the vehicle, comprising the steps of:
- Detecting the acceleration signals (A1 ... An) of a vehicle by means of acceleration sensors (1 .... n);
- Calculating validity signals (G1. ... Gn) of the acceleration sensors (1 .... n);
- Calculating the best value A of the acceleration signals (A1 ... An), based on those validity signals (G1. ... Gn) which are at high level corresponding to the properly functioning sensors (1 ... n);
- Determining the value V of the vehicle speed integrating the best acceleration value A;
- Combining the value V with the best value A of the acceleration to determine, in case of braking of the vehicle, a plurality of levels of collision dangerousness (0 ... k);
- Correlating, in correspondence of the levels of collision dangerousness (0 ... k), the digital mode signals (B1 ... Bm) to predetermined visual signaling modes of the lighting bodies of the vehicle;
**Characterized in that** the step of calculating validity signals (G1. ... Gn) of the acceleration sensors (1 .... n) comprises the steps of:
- deriving the difference (A1-A2, A2-A3, A1-A3) between the acceleration values (A1, A2, A3) of the possible pairs of sensors (1, 2; 2, 3; 1, 3) respectively by means of differential circuits (Dc1, Dc2, Dc3);
- comparing the difference values (A1-A2, A2-A3, A1-A3) verifying if the difference values (A1-A, A2-A3, A1-A3) belong to a tolerance range having values symmetrical with respect to zero, providing output signals (C1, C2, C3) having a logic value equal to 1 for sensors (1, 2; 2, 3; 1, 3) with compatible acceleration values and equal to 0 for sensors (1, 2, 2, 3; 1, 3) with incompatible acceleration values;
- processing the signals (C1, C2, C3) and providing, as output, signals (G1, G2, G3) having a logic value equal to 1 respectively for properly functioning sensors (1, 2, 3) and logic value equal to 0 respectively for not properly functioning sensors (1, 2, 3).

## Patentansprüche

1. System (10) zum visuellen Signalisieren der Bremsintensität eines Fahrzeugs unabhängig vom Bremspedal des Fahrzuegs, das Folgendes umfasst:
- eine Erfassungseinheit (11), die mehrere Beschleunigungssensoren (1 .... n) umfasst, die Signale (A1 ... An) bereitstellen können, die der Längsbeschleunigung des Fahrzeugs entsprechen;
- eine erste Berechnungseinheit (12) zum Berechnen des besten Beschleunigungswerts A, die die Signale (A1 ... An) von der Erfassungseinheit (11) und Gültigkeitssignale (G1 ... Gn) der Beschleunigungssensoren (1 .... n) von einer zweiten Berechnungseinheit (13) empfängt;
- eine zweite Berechnungseinheit (13) der Gültigkeitssignale (G1 ... Gn) der Beschleunigungssensoren (1 .... n), die die Signale (A1 ... An) von der Erfassungseinheit (11) empfängt;
- eine Verarbeitungseinheit (14) die zum Empfangen des besten Beschleunigungswerts A von der Berechnungseinheit (12) und der Gültigkeitssignale (G1 ... Gn) von der Berechnungseinheit (13) und zum Bereitstellen von Digitalmodussignalen (B1 ... Bm) an eine Aktivierungseinheit (15) konfiguriert ist;
- eine Aktivierungseinheit (15), die zum Dekodieren der Digitalmodussignale (B1 ... Bm) und zum Bereitstellen elektrischer Ausgabesignale (P1 ... Pq) für eine visuelle Signalisierungseinheit (16) konfiguriert ist;
- eine visuelle Signalisierungseinheit (16) die Leuchtkörper umfasst, die von den elektrischen Ausgabesignalen (P1 ... Pq) aktiviert werden können;
wobei die Verarbeitungseinheit (14) zum Bestimmen des Fahrzeuggeschwindigkeitswerts V und zum Kombinieren desselben mit dem besten Beschleunigungswert A konfiguriert ist, um im Fall des Bremsens des Fahrzeugs mehrere Ebenen der Kollisionsgefahr (0 ... k) zu bestimmen, wobei die Aktivierungseinheit (15) in Übereinstimmung damit zum Korrelieren der Digitalmodussignale (B1 ... Bm) mit vorgegebenen visuellen Signalisierungsmodi der Leuchtkörper der visuellen Signalisierungseinheit konfiguriert ist;
**dadurch gekennzeichnet, dass** die zweite Berechnungseinheit (13) Folgendes umfasst:
- einen ersten Differenzialschaltungsblock (101), der die Differenz (A1-A2, A2-A3, A1-A3) zwischen den Beschleunigungswerten (A1, A2, A3) der möglichen Paare von Sensoren (1, 2; 2, 3; 1, 3) jeweils mittels Differenzialschaltungen (Dc1, Dc2, Dc3) ableiten kann;
- einen zweiten Schaltungsblock (102) zum Vergleichen der Differenzwerte (A1-A2, A2-A3, A1-A3), der Fenstervergleicher (W1, W2, W3) umfasst, die konfiguriert sind zum Verifizieren, ob die Differenzwerte (A1-A2, A2-A3, A1-A3) zu einem Toleranzbereich gehören, der in Bezug auf Null symmetrische Werte aufweist, und zum Bereitstellen von Ausgabesignalen (C1, C2, C3), die einen logischen Wert gleich 1 für Sensoren (1, 2; 2, 3; 1, 3) mit kompatiblen Beschleunigungswerten und gleich 0 für Sensoren (1, 2; 2, 3; 1, 3) mit inkompatiblen Beschleunigungswerten aufweisen;
- einen dritten Schaltungsblock (103) der kombinatorische Logikschaltungen (104, 105, 106) umfasst, die konfiguriert sind zum Verarbeiten der Signale (C1, C2, C3) und zum Bereitstellen, als Ausgabe, von Signalen (G1, G2, G3), die einen logischen Wert gleich 1 für ordnungsgemäß funktionierende Sensoren (1, 2, 3) beziehungsweise einen logischen Wert gleich 0 für nicht ordnungsgemäß funktionierende Sensoren (1, 2, 3) aufweisen.

2. Verfahren zum Betreiben eines Systems (10) zum visuellen Signalisieren der Bremsintensität eines Fahrzeugs unabhängig vom Bremspedal des Fahrzeugs, das die folgenden Schritte umfasst:
- Erfassen der Beschleunigungssignale (A1 ... An) eines Fahrzeugs mittels Beschleunigungssensoren (1 .... n);
- Berechnen von Gültigkeitssignalen (G1. ... Gn) der Beschleunigungssensoren (1 .... n);
- Berechnen des besten Werts A der Beschleunigungssignale (A1 ... An) basierend auf den Gültigkeitssignalen (G1. ... Gn), die sich auf einer hohen Ebene befinden, die den ordnungsgemäß funktionierenden Sensoren (1 .... n) entspricht;
- Bestimmen des Werts V der Fahrzeuggeschwindigkeit, die den besten Beschleunigungswert A integriert;
- Kombinieren des Werts V mit dem besten Wert A der Beschleunigung, um im Fall des Bremsens des Fahrzeugs mehrere Ebenen der Kollisionsgefahr (0 ... k) zu bestimmen;
- Korrelieren der Digitalmodussignale (B1 ... Bm) mit vorgegebenen visuellen Signalisierungsmodi der Leuchtkörper des Fahrzeugs in Übereinstimmung mit den Ebenen der Kollisionsgefahr (0 ... k);
**dadurch gekennzeichnet, dass** der Schritt des Berechnens von Gültigkeitssignalen (G1. ... Gn) der Beschleunigungssensoren (1 .... n) die folgenden Schritte umfasst:
- Ableiten der Differenz (A1-A2, A2-A3, A1-A3) zwischen den Beschleunigungswerten (A1, A2, A3) der möglichen Paare von Sensoren (1, 2; 2, 3; 1, 3) jeweils mittels Differenzialschaltungen (Dc1, Dc2, Dc3);
- Vergleichen der Differenzwerte (A1-A2, A2-A3, A1-A3), um zu verifizieren, ob die Differenzwerte (A1-A2, A2-A3, A1-A3) zu einem Toleranzbereich gehören, der in Bezug auf Null symmetrische Werte aufweist, und zum Bereitstellen von Ausgabesignalen (C1, C2, C3), die einen logischen Wert gleich 1 für Sensoren (1, 2; 2, 3; 1, 3) mit kompatiblen Beschleunigungswerten und gleich 0 für Sensoren (1, 2; 2, 3; 1, 3) mit inkompatiblen Beschleunigungswerten aufweisen;
- Verarbeiten der Signale (C1, C2, C3) und Bereitstellen, als Ausgabe, von Signalen (G1, G2, G3), die einen logischen Wert gleich 1 für ordnungsgemäß funktionierende Sensoren (1, 2, 3) beziehungsweise einen logischen Wert gleich 0 für nicht ordnungsgemäß funktionierende Sensoren (1, 2, 3) aufweisen.

## Revendications

1. Système (10) de signalisation visuelle de l'intensité de freinage d'un véhicule indépendant de la pédale de frein du véhicule, comprenant :
- une unité de détection (11), comprenant une pluralité de capteurs d'accélération (1 .... n) pouvant fournir des signaux (A1 ... An) correspondant à l'accélération longitudinale du véhicule ;
- une première unité de calcul (12) pour calculer la meilleure valeur d'accélération A, recevoir les signaux (A1 ... An) à partir de l'unité de détection (11) et des signaux de validité (G1 ... Gn) des capteurs d'accélération (1 .... n) à partir d'une seconde unité de calcul (13) ;
- une seconde unité de calcul (13) des signaux de validité (G1 ... Gn) des capteurs d'accélération (1 .... n), recevant les signaux (A1 ... An) à partir de l'unité de détection (11) ;
- une unité de traitement (14) configurée pour recevoir la meilleure valeur d'accélération A à partir de l'unité de calcul (12) et les signaux de validité (G1 ... Gn) à partir de l'unité de calcul (13) et pour fournir des signaux en mode numérique (B1 ... Bm) à une unité d'actionnement (15) ;
- une unité d'actionnement (15) configurée pour décoder les signaux en mode numérique (B1 ... Bm) et pour fournir des signaux de sortie électrique (P1 ... Pq) à une unité de signalisation visuelle (16) ;
- une unité de signalisation visuelle (16) comprenant des corps d'éclairage pouvant être activés par les signaux de sortie électrique (P1 ... Pq) ;
ladite unité de traitement (14) étant configurée pour déterminer la valeur de vitesse de véhicule V et pour la combiner avec la meilleure valeur d'accélération A, de sorte à déterminer, en cas de freinage du véhicule, une pluralité de niveaux de dangerosités de collision (0 ... k) en correspondance avec lesquels ladite unité d'actionnement (15) est configurée pour corréler les signaux en mode numérique (B1 ... Bm) avec des modes de signalisation visuelle prédéfinis des corps d'éclairage de l'unité de signalisation visuelle (16) ;
**caractérisé en ce que** la seconde unité de calcul (13) comprend :
- un premier bloc de circuit différentiel (101), pouvant dériver la différence (A1-A2, A2-A3, A1-A3) entre les valeurs d'accélération (A1, A2, A3) des paires possibles de capteurs (1, 2 ; 2, 3 ; 1, 3) respectivement au moyen de circuits différentiels (Dc1, Dc2, Dc3) ;
- un deuxième bloc de circuit (102) pour comparer les valeurs de différence (A1-A2, A2-A3, A1-A3) comprenant des comparateurs à fenêtre (W1, W2, W3) configuré pour vérifier si les valeurs de différence (A1-A, A2-A3, A1-A3) appartiennent à une plage de tolérance ayant des valeurs symétriques par rapport à zéro, fournir des signaux de sortie (C1, C2, C3) ayant une valeur logique égale à 1 pour des capteurs (1, 2 ; 2, 3 ; 1, 3) avec des valeurs d'accélération compatibles et égale à 0 pour des capteurs (1, 2, 2, 3 ; 1, 3) avec des valeurs d'accélération incompatibles ;
- un troisième bloc de circuit (103) comprenant des circuits logiques combinatoires (104, 105, 106) configuré pour traiter les signaux (C1, C2, C3) et pour fournir, en sortie, des signaux (G1, G2, G3) ayant une valeur logique égale à 1 respectivement pour des capteurs fonctionnant correctement (1, 2, 3) et une valeur logique égale à 0 respectivement pour des capteurs ne fonctionnant pas correctement (1, 2, 3).

2. Procédé de fonctionnement d'un système (10) de signalisation visuelle de l'intensité de freinage d'un véhicule indépendant de la pédale de frein du véhicule, comprenant les étapes consistant à :
- détecter les signaux d'accélération (A1 ... An) d'un véhicule au moyen de capteurs d'accélération (1 .... n) ;
- calculer des signaux de validité (G1. ... Gn) des capteurs d'accélération (1 .... n) ;
- calculer la meilleure valeur A des signaux d'accélération (A1 ... An), sur la base de ces signaux de validité (G1. ... Gn) qui sont à un niveau élevé correspondant aux capteurs fonctionnant correctement (1 ... n);
- déterminer la valeur V de la vitesse de véhicule intégrant la meilleure valeur d'accélération A ;
- combiner la valeur V avec la meilleure valeur A de l'accélération pour déterminer, en cas de freinage du véhicule, une pluralité de niveaux de dangerosités de collision (0 ... k) ;
- corréler, en correspondance avec les niveaux de dangerosités de collision (0 ... k), les signaux en mode numérique (B1 ... Bm) avec des modes de signalisation visuelle prédéfinis des corps d'éclairage du véhicule ;
**caractérisé en ce que** l'étape consistant à calculer des signaux de validité (G1. ... Gn) des capteurs d'accélération (1 .... n) comprend les étapes consistant à :
- dériver la différence (A1-A2, A2-A3, A1-A3) entre les valeurs d'accélération (A1, A2, A3) des paires possibles de capteurs (1, 2 ; 2, 3 ; 1, 3) respectivement au moyen de circuits différentiels (Dc1, Dc2, Dc3) ;
- comparer les valeurs de différence (A1-A2, A2-A3, A1-A3) en vérifiant si les valeurs de différence (A1-A, A2-A3, A1-A3) appartiennent à une plage de tolérance ayant des valeurs symétriques par rapport à zéro, en fournissant des signaux de sortie (C1, C2, C3) ayant une valeur logique égale à 1 pour des capteurs (1, 2 ; 2, 3 ; 1, 3) avec des valeurs d'accélération compatibles et égale à 0 pour des capteurs (1, 2, 2, 3 ; 1, 3) avec des valeurs d'accélération incompatibles ;
- traiter les signaux (C1, C2, C3) et fournir, en sortie, des signaux (G1, G2, G3) ayant une valeur logique égale à 1 respectivement pour des capteurs fonctionnant correctement (1, 2, 3) et une valeur logique égale à 0 respectivement pour des capteurs ne fonctionnant pas correctement (1, 2, 3).
